# EUROPEAN PATENT APPLICATION

(11) **EP 1 106 057 A2**
(43) Date of publication of application: **13.06.2001**
(21) Application number: 00126729.3
(22) Date of filing: 05.12.2000
(51) Int. Cl.: A01G 9/02

(54) **Flowerpot**

(30) Priority: 07.12.1999 JP 34736399
(71) Applicant: UTSUI CO.,LTD, Osaka-shi, Osaka (JP)
(72) Inventor: Utsui, Kouji, Osaka-shi, Osaka (JP)
(74) Representative: Wagner, Bernhard Peter

(57) **Abstract**

A flowerpot comprises a bottom wall 2 and a peripheral wall 3 extending upward from an outer peripheral edge of the bottom wall 2, with a drain hole 21 formed in the bottom wall 2. The bottom wall 2 and the peripheral wall 3 are made of a flexible heat insulating sheet 1 comprising an expanded synthetic resin sheet 13 or a cushion sheet 7 and a decorative sheet 14 laminated to the sheet 13 or 7, the decorative sheet 14 facing outside. The flowerpot has a double structure formed by inwardly folding an upper portion of the peripheral wall 3.

## Description

### FIELD OF THE INVENTION

The present invention relates to flowerpots having high heat insulating properties and assuring plants of satisfactory growth.

### BACKGROUND OF THE INVENTION

Pottery pots or unglazed pottery pots are generally in wide use as flowerpots. However, these flowerpots transmit atmospheric temperature changes directly to the soil therein, so that much labor is required for controlling the temperature of the plants grown in the pots especially during winter.

Furthermore, the pots of pottery or unglazed pottery have the drawback of being heavy and prone to cracking.

An object of the present invention is to provide a flowerpot free of the above problems and having a heat insulating effect.

### SUMMARY OF THE INVENTION

The present invention provides a heat insulating flowerpot comprising a bottom wall 2 and a peripheral wall 3 which are made from a flexible heat insulating sheet 1 comprising an expanded synthetic resin sheet 13 and a decorative sheet 14 laminated to the outer surface of the expanded sheet 13. The flowerpot is made, with the decorative sheet 14 facing outside.

The flowerpot is formed by folding the heat insulating sheet 1 in two, thermally bonding opposite side edges of the folded sheet 1 to form a bag, making the bottom of the bag quadrilateral to form a bottom wall 2, inwardly folding outer ends of triangular tabs 4, 4 extending outward from opposed sides of the bottom wall 2, further folding the entire tabs 4, 4 toward the bottom wall 2 and joining the tabs 4, 4 to the bottom wall 2. The peripheral wall 3 can be given a double wall structure if an upper portion thereof is folded inward

The flexible heat insulating sheet 1 is formed by laminating a reinforcing material 15 to an expanded synthetic resin sheet 13, and then laminating a decorative sheet 14 to the reinforcing material 15. A multiplicity of small vents 18 are formed in the peripheral wall 3.

The expanded synthetic resin sheet has good heat preserving and insulating properties which are characteristic thereof and which make the temperature change of the soil in the pot moderate even when atmospheric or room temperature changes abruptly, consequently diminishing the influence on the growth of the plant.

The flowerpot made from the heat insulating sheet 1 consisting mainly of the expanded synthetic resin sheet 13 is much smaller than pottery or unglazed pottery flowerpots in weight, unlikely to crack and therefore convenient to handle.

Furthermore, the flowerpot is easily deformable because of the high flexibility of the heat insulating sheet 1. Accordingly, a clearance is formed between the peripheral wall and the soil in the pot to ensure improved ventilation for the growth of the root of the plant. The flowerpot can be shipped or transported as folded and is less costly to store and transport.

The decorative sheet 14 appearing on the outer side of the flowerpot gives an aesthetic appearance to the pot and eliminates the need to package the pot portion when the plant as grown in the pot is to be packaged as a present.

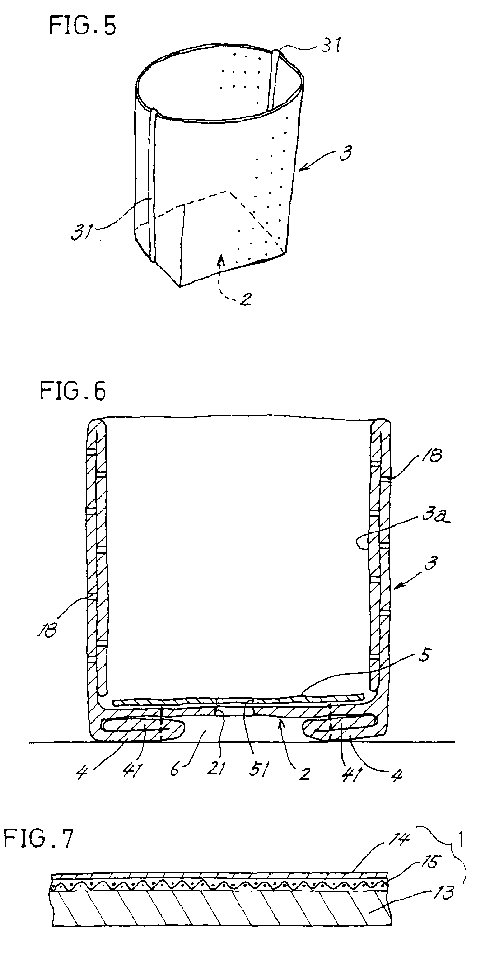

When the triangular tabs 4, 4 extending outward from opposed sides of the quadrilateral bottom wall 2 of the flowerpot are inwardly folded at their outer ends, and if the entire tabs 4, 4 are further folded toward and joined to the bottom wall 2, the thickness of the tab 4 beneath the bottom wall increases by an amount corresponding to the inwardly folded outer end of the tab. When the flowerpot is placed on the ground, this forms an air flow space 6 between the bottom wall 2 and the ground (see FIG. 6), maintaining ventilation in the pot through drain holes 21.

When the decorative sheet 14 is an aluminized sheet or aluminum foil, the pot not only shines in its entirety to produce an improved aesthetic effect but also reflects the sunlight to effectively suppress a rise in the temperature of the soil in the pot.

To make the flowerpot, a sheet in the form of a strip is folded in two first, and the opposite side edges along the length of the sheet are thermally bonded. The bottom of the resulting bag is made rectangular to obtain a flowerpot. The flowerpot is easy to make, and tough because no seam is formed between the peripheral wall 3 and the bottom wall 2. When an upper portion of the peripheral wall 3 is folded inward to form a double wall structure, the pot is given improved toughness.

A multiplicity of small vents 18, if formed in the peripheral wall 3, assure the pot of ventilation to give a favorable influence on the growth of the root of the plant in the pot.

### BRIEF DESCRIPTION OF THE DRAWINGS

FIG. 1 is a perspective view showing a heat insulating sheet as folded in two;
FIG. 2 is a perspective view of a flowerpot in the course of making;
FIG. 3 is a perspective view of a flowerpot bottom portion in the course of making;
FIG. 4 is a perspective view of a quadrilateral opening portion of the flowerpot;
FIG. 5 is a perspective view of a flowerpot which is generally circular at its opening portion;
FIG. 6 is a view in section of the flowerpot;
FIG. 7 is a view in section of the heat insulating sheet;
FIG. 8 is a perspective view of another flowerpot;
FIG. 9 is a view in section of another flowerpot;
FIG. 10 is a view in section of another heat insulating sheet; and
FIG. 11 is a perspective view of the flowerpot as folded.

### DETAILED DESCRIPTION OF THE PREFERRED EMBODIMENTS

### [Overall Construction]

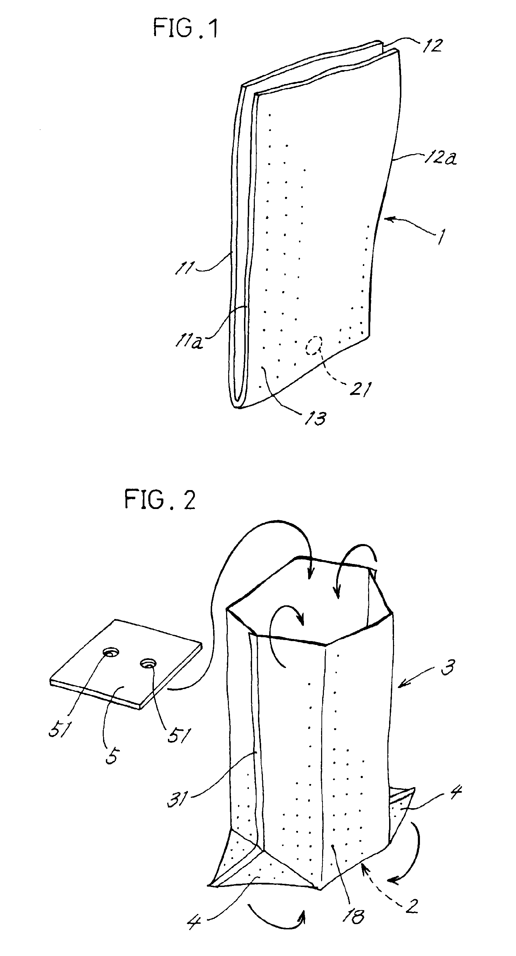

FIG. 6 shows a flowerpot of the invention, which comprises a generally rectangular bottom wall 2 and a peripheral wall 3 extending upward from the outer periphery of the bottom wall 2 integrally therewith. The flowerpot is made from a flexible heat insulating sheet 1 in the form of a strip and shown in FIG. 1.

As shown in FIG. 7, the flexible heat insulating sheet 1 is made by sandwiching a reinforcing material 15 with an expanded synthetic resin sheet 13 and a decorative sheet 14 and adhering or thermally bonding the sheets 13, 14 to the material 15.

The expanded synthetic resin sheet 13 is obtained from expanded synthetic resin such as expanded polyethylene, polypropylene or polystyrene and is preferably 1 to 5 mm in thickness.

The reinforcing material 15 of the embodiment is polyethylene cloth.

The decorative sheet 14 is aluminum foil or an aluminized film prepared by forming an aluminum layer on a synthetic resin film by vacuum evaporation.

The expanded synthetic resin sheet 13, reinforcing material 15 and the decorative sheet 14 are affixed to one another by thermal bonding or with an adhesive.

A multiplicity of vents 18 having a small diameter of 0.1 to 1.0 mm and arranged vertically and horizontally at an interval of about 25 mm are formed in the heat insulating sheet 1.

### [Method of Forming the Flowerpot]

The flowerpot is formed by folding the striplike heat insulating sheet 1 in two at the longitudinal midportion thereof as seen in FIG. 1 and thermally bonding the longitudinal lapping opposite side edge portions 11, lla and 12, 12a of the sheet to make a bag first which is open at one end. Drain holes 21, 21 are formed in the sheet 1 in advance at positions corresponding to the bottom portion of the bag.

Next, the bottom portion of the bag is folded inward to form a square bottom wall 2 as shown in FIG. 2. The drain holes 21, 21 are positioned in the bottom wall 2.

A peripheral wall 3 is continuous with the outer periphery of the square bottom wall 2. The heat insulating sheet 1 is so folded that the peripheral wall 3 has two projecting seams 31, 31 at the positions of a diagonal line. Triangular tabs 4, 4 continuous with the bottom wall 2 are formed at the lower end of the peripheral wall 3, and each seam 31 has a lower end portion in alignment with a line dividing the tab 4 in two.

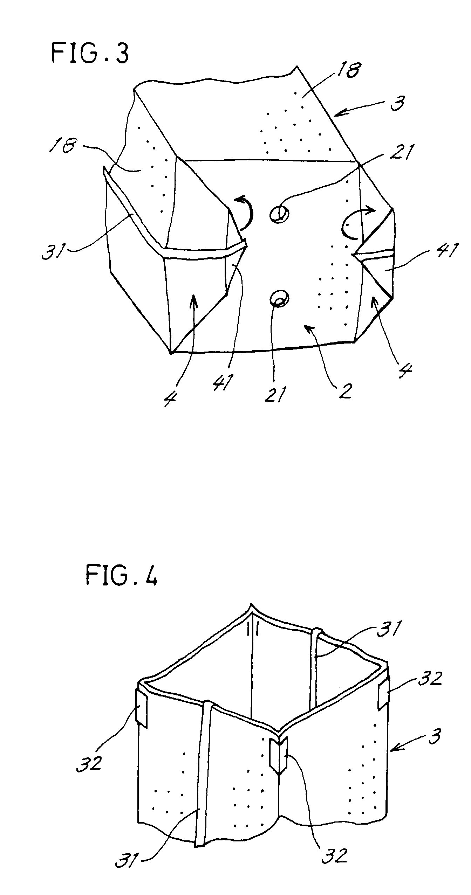

As shown in FIG. 3, the tapered outer end 41 of each tab 4 is first folded inward, and the tab 4 is then fixed in its entirety to the bottom wall 2 by sewing, or with an adhesive or double-faced adhesive tape.

The approximate upper half of the height of the peripheral wall 3 is folded inward to give the peripheral wall 3 a double structure (see FIG. 6).

A reinforcing bottom plate 5 made of the same material as the heat insulating sheet 1 and given the same shape as, but a smaller size than, the bottom wall 2 is placed over the bottom wall 2. In this way, a flowerpot is completed.

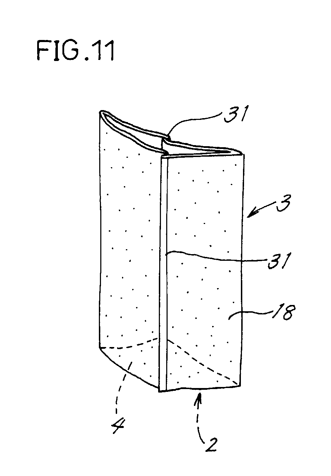

The flowerpot is shipped or transported as folded with its bottom wall 2 folded inward as shown in FIG. 11, whereby the pot is made less bulky and made convenient and less costly to transport.

In the case where the peripheral wall 3 is to be given a quadrilateral opening, resin or metal holding members 32 are attached to the respective four corners of the opening portion to prevent the peripheral wall 3 from collapsing as shown in FIG. 4.

If it is desired to give a circular opening to the peripheral wall 3 as shown in FIG. 5, the opening portion may be made round while placing soil into the pot.

### [Advantages of the Flowerpot]

The expanded synthetic resin sheet forming the heat insulating sheet 1 has good heat preserving and insulating properties, which make the temperature change of the soil in the pot moderate even when atmospheric or room temperature changes abruptly, consequently diminishing the influence on the growth of the plant.

The flowerpot made of the heat insulating sheet is much smaller than pottery or unglazed pottery flowerpots in weight, unlikely to crack and therefore convenient to handle.

Since the sheet is highly flexible, the flowerpot can be shipped or transported as folded, hence a reduced transport cost.

With the decorative sheet 14 appearing on the outer side of the flowerpot, the portion of the pot need not be packaged when the plant grown in the pot is to be packaged as a present.

With the flowerpot of the present invention, the outer end 41 of each triangular tab 4 is folded inward, and the entire tab 4 is then folded over and joined to the bottom wall 2, whereby the tab 4 is given an increased overall thickness. When the flowerpot is placed on the ground, therefore, this forms an air flow space 6 between the bottom wall 2 and the ground, maintaining ventilation in the pot through the drain holes 21.

Since the decorative sheet 14 is an aluminized sheet or aluminum foil, the pot not only shines in its entirety to produce an improved aesthetic effect but also reflects the sunlight to effectively suppress a rise in the temperature of the soil in the pot.

Because the heat insulating sheet 1 includes the reinforcing material 15 and further because the peripheral wall 3 has a double structure, the pot is enhanced in strength and can be of an increased size.

If the expanded synthetic resin sheet 13 is brought into direct contact with soil, the sheet 13 is prone to break, whereas according to the present embodiment, the approximate upper half of the height of the peripheral wall 3 is folded inward to provide a double structure, with the reinforcing bottom plate 5 placed inside the pot. This permits the aluminized sheet or aluminum foil to come into contact with soil, preventing the expanded sheet 13 from directly contacting with soil to give the pot a lengthened life.

The pot can be formed easily by folding the striplike heat insulating sheet 1 in two, thermally bonding the opposite side edges of the folded sheet and folding the resulting bag. The pot is tough because there is no seam between the peripheral wall 3 and the bottom wall 2.

A multiplicity of vents 18, if formed in the peripheral wall 3, assure the pot of ventilation, which exerts a favorable influence on the growth of the plant in the pot.

Since the heat insulating sheet 1 forming the flowerpot of the present invention is flexible, the flowerpot is easily deformable. Accordingly, a clearance easily occurs between the peripheral wall and the soil in the pot to maintain satisfactory ventilation, which readily permits the growth of the root to produce a greater plant than in conventional unglazed pottery pots.

Although the decorative sheet 14 is an aluminized sheet or aluminum foil according to the foregoing embodiment, the sheet 14 may alternatively be paper or fabric, especially nonwoven fabric.

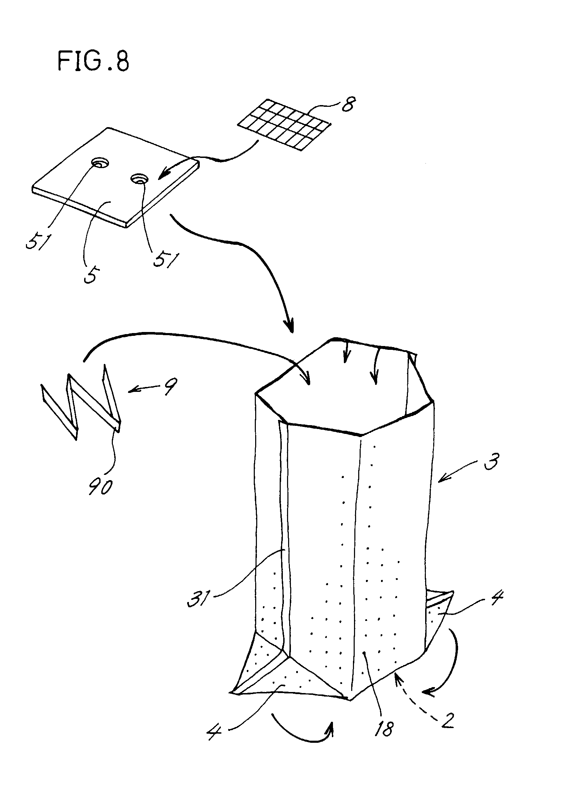

When the flowerpot is to be used actually, the reinforcing bottom plate 5 may be placed into the pot, with a spacer 9 interposed between the bottom plate 5 and the bottom portion of the pot as shown in FIG. 8. The spacer 9 is formed by bending a tough strip 90 zigzag to provide a clearance between the pot bottom portion and the reinforcing bottom plate 5. This ensures smooth drain to improve the growth of the root of the plant.

Further as seen in FIG. 8, a net 8 may be fixedly provided on the reinforcing bottom plate 5 for covering holes 51. The net 8 thus provided prevents slugs from entering the flowerpot from outside through the holes 51.

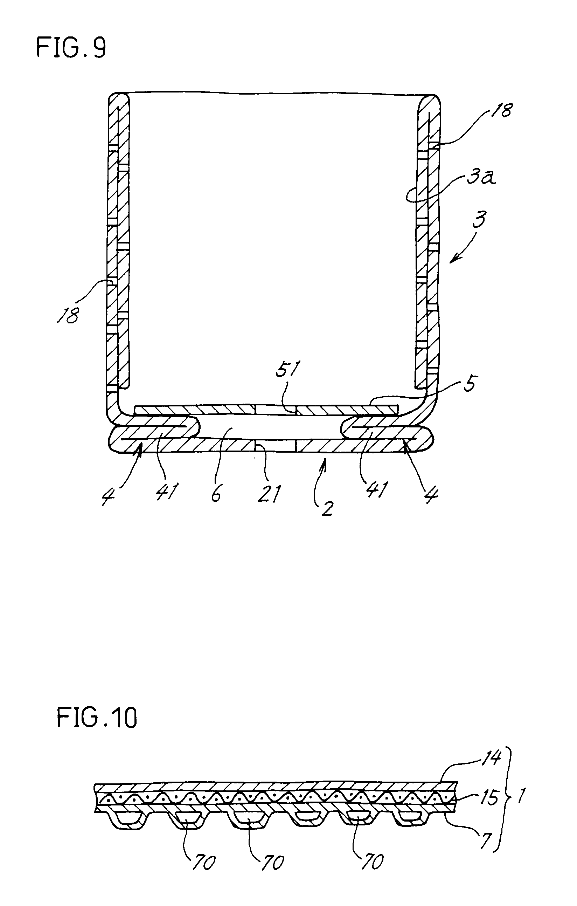

Further as shown in FIG. 3, the tabs 4 are formed at the lower end of the peripheral wall 3, folded inward and then fixed to the bottom surface of the bottom wall 2, whereas as shown in FIG. 9, tabs 4 at the lower end of the peripheral wall 3 may be formed alternatively above the bottom wall 2, then folded inward and fixed at their lower face to the upper surface of the bottom wall 2.

Although the heat insulating sheet 1 is formed by sandwiching the reinforcing material 15 with the expanded synthetic resin sheet 13 and the decorative sheet 14 (see FIG. 7), a cushion sheet 7 may alternatively be used in place of the expanded sheet 13.

The cushion sheet 7 is a polyethylene sheet having a multiplicity of small air chambers 70 formed on the surface thereof, as is already known, for example, for use in packaging cakes.

Although the flowerpot is made from the heat insulating sheet 1, the sheet 1 may be used for forming a cover for covering the flowerpot. The decorative sheet 14 faces outside also in the case of this flowerpot cover.

## Claims

1. A flowerpot comprising a bottom wall (2) and a peripheral wall (3) extending upward from an outer peripheral edge of the bottom wall (2), the bottom wall (2) having a drain hole (21), the bottom wall (2) and the peripheral wall (3) being made of a flexible heat insulating sheet (1) comprising an expanded synthetic resin sheet (13) or a cushion sheet (7) having a multiplicity of small air chambers (70) formed on a surface thereof, and a decorative sheet (14) laminated to the sheet (13) or (7), the decorative sheet (14) facing outside.

2. A flowerpot according to claim 1 which is formed by thermally bonding opposite side edges of the heat insulating sheet (1) as folded in two to form a bag, making a bottom of the bag approximately flat to form the bottom wall (2), inwardly folding outer ends of triangular tabs (4), (4) extending outward from opposite sides of the bottom wall (2), further folding the entire tabs (4), (4) toward the bottom wall (2) and joining the tabs (4), (4) to the bottom wall (2).

3. A flowerpot according to claim 1 wherein the flexible heat insulating sheet (1) is formed by laminating a reinforcing material (15) to the expanded synthetic resin sheet (13) or the cushion sheet (7), and then laminating the decorative sheet (14) to the reinforcing material (15).

4. A flowerpot according to claim 1 wherein the peripheral wall (3) has a double structure formed by inwardly folding an upper portion thereof.

5. A flowerpot according to claim 1 wherein a multiplicity of small vents (18) are formed in the peripheral wall (3).
